# FASCICULE DE BREVET EUROPEEN

(11) **EP 1 776 249 B1**
(45) Date de publication et mention de la délivrance du brevet: **26.11.2008**
(21) Numéro de dépôt: 05777874.8
(22) Date de dépôt: 01.08.2005
(51) Int. Cl.: B60C 17/06

(54) **ASSEMBLAGE PNEU/ROUE POUR VEHICULE AUTOMOBILE**
REIFEN-/RADANORDNUNG FÜR EIN KRAFTFAHRZEUG
TYRE/WHEEL ASSEMBLY FOR MOTOR VEHICLE

(30) Priorité: 02.08.2004 FR 0408558
(43) Date de publication de la demande: 25.04.2007
(73) Titulaire: Société de Technologie Michelin, 63000 Clermont-Ferrand (FR); Michelin Recherche et Technique S.A., 1763 Granges-Paccot (CH)
(72) Inventeur: COGNE, Michael, F-63200 Riom (FR); SIMONOT, Laure, Greenville, SC 29607 (US); MAUCLIN, Jean-Louis, F-63430 Pont du Chateau (FR)
(74) Mandataire: Ribière, Joel
(86) Numéro de dépôt international: PCT/EP2005/008311
(87) Numéro de publication internationale: WO 2006/013076

(56) Documents cités:
- EP-A- 1 400 376
- WO-A-02/04237
- FR-A- 2 293 486
- FR-A- 2 838 449
- US-A1- 2003 186 822

## Description

La présente invention est relative à la lubrification d'une interface entre une enveloppe de pneumatique (ou "pneumatique") et un appui de sécurité en matériau à très haut module monté sur une jante de roue à l'intérieur de ladite enveloppe de pneumatique.

Elle se rapporte plus particulièrement à un ensemble monté pour véhicule automobile, et à la lubrification, dans un tel ensemble, entre l'appui de sécurité et l'enveloppe en roulage à plat suite à une chute de pression de gonflage à l'intérieur de ladite enveloppe.

Pour retarder, lors du roulage à pression réduite ou nulle (dit roulage « à plat ») d'une enveloppe de pneumatique, la détérioration par échauffement des zones de frottement entre diverses parties de la face interne de l'enveloppe ou bien entre celle-ci et la jante métallique de roue, on a cherché par le passé à pourvoir la face interne de l'enveloppe de compositions lubrifiantes destinées à réduire la friction entre ces zones de frottement.

Des compositions lubrifiantes susceptibles de lubrifier des interfaces enveloppe/ enveloppe ou jante/ enveloppe, ont été par exemple décrites dans les documents de brevet FR 2293486 (ou US 4,051,884), US 3,946,783. Elles comprennent essentiellement, de manière connue, un agent lubrifiant, tel que par exemple un polymère d'oxyde d'alcène (ou polyoxyalcène) ou de la glycérine, et un agent épaississant, tel que par exemple de la silice, destiné à élever la viscosité de l'agent lubrifiant de sorte à minimiser le coulage dudit agent lubrifiant en raison de la pesanteur lorsque le véhicule est au repos ou roule avec ses enveloppes de pneumatique à l'état gonflé.

On a cherché plus récemment à améliorer l'endurance des « ensembles montés » (i.e., assemblage pneu/ roue ou *"tyre*/ *wheel assembly"*), dans des conditions de roulage à pression de gonflage réduite ou nulle, en prévoyant un appui de sécurité spécifique à l'intérieur du pneumatique, monté sur la jante de roue de manière à pouvoir soutenir la bande de roulement de l'enveloppe en cas de chute de la pression de gonflage. Pour la description de tels appuis de sécurité, on peut citer par exemple les documents de brevet FR 2746347 (ou US 5,891,279) ou WO 00/76791 (ou US 6,564,842), qui correspond au préambule de la revendication indépendante 1.

Dans ce contexte, on a testé des compositions lubrifiantes appui/ enveloppe qui sont plus spécifiquement destinées à réduire la friction entre ledit appui et la face interne de l'enveloppe entourant l'appui, dans des conditions de roulage à plat et de charge plus sévères et sur des durées nettement supérieures à celles se rapportant aux tests antérieurs sans appui de sécurité. De telles compositions lubrifiantes ont par exemple été décrites dans les documents de brevet FR 2480201 (ou GB 2074955), FR 2415551 (ou GB 2013143), WO 02/04237 (ou US 2003/087766). Ces compositions sont usuellement appliquées sur la face interne de l'enveloppe, préalablement au montage de celle-ci sur la jante.

Un objectif permanent, pour un fabricant d'ensembles montés, est d'alléger ces ensembles montés et donc les appuis eux-mêmes, en utilisant des structures d'appui relativement "aérées", aussi peu massives que possible, tel que décrit par exemple dans la demande WO 00/76791 précitée.

Poursuivre cet effort d'allégement nécessite aujourd'hui de s'orienter vers l'emploi de matériaux d'appui possédant un très haut module en extension, typiquement supérieur à 50 MPa, de préférence supérieur à 60 MPa, pour une température proche de la température de fonctionnement d'un ensemble monté en conditions de roulage à plat, soit environ 80°C. L'emploi de tels matériaux permet d'amincir de manière notable les épaisseurs de la structure portante de l'appui.

Toutefois, en raison de cette diminution des sections transmettant les contraintes du pneumatique vers l'appui et donc de l'augmentation des pressions de contact qui en résulte, le risque d'un endommagement de la face interne de l'enveloppe du pneumatique, lors d'un roulage à plat sous conditions très sévères, ne peut plus être totalement écarté, ce qui est susceptible de diminuer l'endurance globale des ensembles montés.

Poursuivant leurs recherches, les Demanderesses ont trouvé des compositions lubrifiantes spécifiques, présentant des caractéristiques particulières de viscosité, qui se sont révélées satisfaire, en termes d'endurance en roulage à plat, aux exigences spécifiques d'un appui à très haut module susceptible de générer, en roulage à plat, des pressions de contact très élevées entre appui et pneumatique, typiquement supérieures à 50 bar (par exemple entre 70 et 120 bar) pour une plage de charge sur ledit appui comprise entre 400 et 800 daN.

En conséquence, l'invention concerne un ensemble monté pour véhicule automobile comportant une jante, un appui de sécurité qui est monté sur la jante et dont au moins la face radialement externe est constituée d'un matériau à très haut module, une enveloppe de pneumatique montée sur la jante autour dudit appui, ladite jante présentant en chacun de ses deux bords périphériques un siège de jante sur lequel est monté un bourrelet de ladite enveloppe, et comportant entre ses deux sièges une portée recevant ledit appui, ledit ensemble monté étant caractérisé en ce que :
■ le matériau à très haut module présente un module sécant en extension à 10% d'allongement, mesuré à 80°C et noté E10, qui est supérieur à 50 MPa ;
■ l'ensemble monté est pourvu d'une composition lubrifiante présentant des valeurs de viscosité (notées respectivement η₁ et η₂), exprimées en Pa.s et mesurées à 20°C, qui vérifient les relations suivantes :
   - sous une vitesse de cisaillement de 0,3 s⁻¹: 80 < η₁ < 2500 ;
   - sous une vitesse de cisaillement de 10 s⁻¹: 0,1 < η₂ < 35.

De préférence, l'ensemble monté selon l'invention est pourvu de la composition lubrifiante sur la face radialement interne de l'enveloppe qui fait face à la jante.

L'invention sera aisément comprise à la lumière de la description détaillée qui suit ainsi que des figures annexées représentant :
- à la Fig. 1, une vue de côté d'un exemple d'appui de sécurité destiné à être inclus dans un ensemble monté selon l'invention ;
- à la Fig. 2, une vue en coupe axiale d'un exemple d'ensemble monté selon l'invention, dans lequel l'appui de la Fig. 1 est monté sur une jante de roue et se trouve en position d'appui contre une enveloppe de pneumatique ;
- à la Fig. 3, une coupe d'un exemple de corps annulaire servant d'élément de support pour l'appui, dont les cloisons présentent plusieurs inversions de courbure dans leur largeur.

### I. DESCRIPTION DETAIILEE DE L'INVENTION

Dans la présente description, sauf indication expresse différente, tous les pourcentages (%) indiqués sont des % en masse.

Pour remplir une fonction de lubrification performante en termes d'endurance de l'ensemble monté conforme à l'invention, la composition lubrifiante ("graisse") utilisée a pour caractéristique essentielle de présenter des valeurs de viscosité, notées respectivement η₁ et η₂, exprimées en Pa.s et mesurées à 20°C, vérifiant les relations suivantes :
- sous une faible vitesse de cisaillement de 0,3 s⁻¹ : 80 < η₁ < 2500 ;
- sous une vitesse de cisaillement élevée de 10 s⁻¹ : 0,1 < η₂ < 35.

Cette composition lubrifiante spécifique présente l'avantage de ne pas couler en conditions de roulage normal (avant le roulage à plat) et d'assurer, en roulage à plat, une lubrification et une endurance toutes deux améliorées par rapport à celles obtenues avec les compositions lubrifiantes connues jusqu'ici, dans le cas d'appuis de sécurité constitués d'un matériau à très haut module.

La viscosité (η) peut être mesurée à l'aide d'un rhéomètre rotatif du type cône-plateau, par exemple du rhéomètre *RheoStress*^{®} 1 (ou "RS1") commercialisé par la société Thermo-Haacke (couplé à un ordinateur et un logiciel d'exploitation des données).

Le cône utilisé (C35/4Ti) a un diamètre de 35 mm et un angle de 4°. L'échantillon de graisse à analyser est déposé au centre du plateau ; après une période de stabilisation de l'échantillon de 5 min sous une vitesse de cisaillement de 0,3 s⁻¹, la viscosité apparente est mesurée à vitesse de cisaillement contrôlée, par paliers de stabilisation successifs d'au moins 30 s, à des vitesse de cisaillement de 0,3, 1,0, 3,0 et 10 s⁻¹. η₁ et η₂ sont calculés de manière connue par le logiciel Rheo Win^{®} du rhéomètre.

L'ajustement de la viscosité dans les fourchettes préconisées ci-dessus, outre le gain en endurance apporté, permet d'éviter en outre :
- en raison d'une fluidité trop élevée, le risque d'un écoulement parasite de la composition au repos, écoulement pouvant générer un problème de balourd en roulage ultérieur en conditions normales (sous pression de gonflage nominale) ;
- en raison d'une fluidité trop faible, le risque d'une distribution non uniforme de la composition autour de l'appui de sécurité, en conditions de roulage à plat, nuisible à l'endurance.

De préférence, pour toutes les raisons indiquées ci-dessus, les relations suivantes sont vérifiées : 150 < η₁ < 2000 et 0,2 < η₂ < 32.

Plus préférentiellement encore, la relation suivante est vérifiée : 350 < η₁ < 1500.

La composition lubrifiante ayant les caractéristiques de viscosité ci-dessus est préférentiellement à base d'au moins un agent lubrifiant et un agent épaississant.

De préférence, cet agent lubrifiant est choisi dans le groupe constitué par les huiles minérales, les huiles silicones, la glycérine, les esters de glycérine et d'acides gras, les polymères de chlorofluorocarbone, les polyoxyalcènes et les mélanges de ces composés.

Plus préférentiellement, il est choisi dans le groupe constitué par la glycérine, les polyoxyalcènes et les mélanges de ces composés.

Un exemple de polyoxyalkylène (ou polyoxyalcène) utilisable est en particulier un polyalkylène glycol. L'alkylène (ou alcène) est de préférence choisi parmi éthylène, propylène et butylène, en particulier parmi éthylène et/ou propylène. Selon un mode particulièrement préféré de réalisation de l'invention, on utilise copolymère ou un mélange de polymères d'oxyde d'éthylène et d'oxyde de propylène. Dans le cas d'un copolymère, ce dernier comporte des unités issues de l'oxyde d'éthylène selon une fraction molaire préférentielle de 40 à 80% (en particulier de 50 à 70%), et des unités issues de l'oxyde de propylène selon une fraction molaire préférentielle de 20 à 60% (en particulier de 30 à 50%).

De préférence, le polyoxyalcène utilisé présente au moins l'une, plus préférentiellement l'ensemble des caractéristiques suivantes :
- une masse moléculaire moyenne en nombre (notée Mn) comprise entre 1 000 et 10 000 g/mol, plus préférentiellement entre 2 000 et 6 000 g/mol ;
- un indice de polymolécularité (noté Ip) inférieur à 1,5, de préférence inférieur à 1,3 (rappel : Ip = Mw/Mn avec Mw masse moléculaire moyenne en poids) ;
- une viscosité apparente comprise entre 100 et 1500 mPa.s, de préférence entre 200 et 1000 mPa.s, ladite viscosité étant mesurée à 23°C selon la norme européenne et internationale EN ISO 2555 de juin 1999 (viscosité selon le procédé de Brookfield ; viscosimètre rotatif du type A ; rotation de 20 tours/min ; mobile N°2 ; modèle RVT).

La macrostructure (Mw et Mn) de l'agent lubrifiant est déterminée par chromatographie d'exclusion stérique à la température de 35°C (solvant tétrahydrofurane selon débit de 1 ml/min ; concentration 1 g/l ; étalonnage en masse de polystyrène ; détecteur constitué d'un réfractomètre différentiel) ; les taux molaires d'unités oxyde d'éthylène et oxyde de propylène sont déterminés de manière connue par RMN.

On utilisera avantageusement un agent lubrifiant, notamment un polyoxyalcène, de grade soluble dans l'eau, ce qui permet le cas échéant d'extraire le produit, par exemple de l'ensemble monté, par un simple lavage à l'eau.

Quant à l'agent épaississant, il est de préférence choisi dans le groupe constitué par les silices, les silicates (e.g., bentonite ou aluminosilicates), les polysaccharides (e.g., cellulose, dérivés de cellulose tels que par exemple carboxyméthylcellulose, ou gomme de xanthane), les sels alcalins (Li, K, Na) d'acides gras, le caoutchouc et les mélanges de ces composés.

On utilise préférentiellement de la silice, par exemple une silice précipitée ou de préférence pyrogénée, une telle silice présentant des surfaces spécifiques BET et CTAB préférentiellement inférieures à 450 m²/g.

Dans le présent exposé, la surface spécifique ("aire massique") BET est déterminée par adsorption de gaz à l'aide de la méthode de Brunauer-Emmett-Teller décrite dans "The Journal of the American Chemical Society" Vol. 60, page 309, février 1938), plus précisément selon la norme française NF ISO 9277 de décembre 1996 (méthode volumétrique multipoints (5 points) - gaz: azote - dégazage: 1 heure à 160°C - domaine de pression relative *p*/*po* : 0,05 à 0,17). La surface spécifique CTAB est la surface externe déterminée selon la norme française NF T 45-007 de novembre 1987 (méthode B).

Plus préférentiellement, on utilise une silice ayant une surface BET comprise entre 50 et 350 m²/g. Au-delà de 350 m²/g, l'endurance de l'ensemble monté de l'invention peut s'écarter de l'optimum, alors que le renforcement de la composition risque d'être pénalisé en dessous de 50 m²/g. Pour ces raisons, on choisira plus préférentiellement encore une silice ayant une surface BET comprise entre 100 et 250 m²/g.

Pour maintenir l'endurance en roulage à plat aux meilleurs niveaux, le taux de silice est de préférence compris entre 4,0% et 7,5%, plus préférentiellement entre 4,5% et 7,0%, par exemple compris dans un domaine d'environ 5% à 6% de silice. Un taux de silice relativement bas d'environ 5% (soit 5 ± 0,3%) est suffisant dans de nombreux cas.

Une caractéristique avantageuse d'une composition lubrifiante préférentielle à base de polyoxyalcène et de silice, telle que décrite ci-dessus, est qu'elle ne nécessite pas la présence d'eau, ce qui favorise l'interaction de l'agent lubrifiant avec l'agent épaississant. C'est en cela qu'elle peut être qualifiée de "non-aqueuse" ou du type non-aqueuse, bien qu'elle puisse supporter sans dommage la présence d'eau en faible quantité. Par composition "non aqueuse", on entend dans la présente demande une composition comportant de préférence moins de 2%, plus préférentiellement moins de 1 % en poids d'eau (% en poids de composition lubrifiante).

A titre préférentiel, la composition lubrifiante de l'ensemble monté selon l'invention est en outre dépourvue de tout autre liquide volatile vaporisable à une température inférieure ou égale à 150°C, tel que par exemple un alcool.

Cette composition lubrifiante peut comprendre en outre, en fonction des modes particuliers de réalisation de l'invention, divers additifs tels qu'antioxydant, colorant, bactéricide, tensioactif ionique ou non ionique, le taux de chacun de ces additifs étant de préférence inférieur à 2% (% en poids de composition).

A la lumière de la présente description et des exemples de réalisation, l'homme du métier saura aisément, en adaptant la formulation mais aussi les conditions de fabrication (température, vitesse et durée de mélangeage) de la composition lubrifiante sélectionnée, ajuster et adapter les viscosités η₁ et η₂ dans les fourchettes préconisées.

La composition lubrifiante précédemment décrite est donc spécifiquement destinée à l'appui en matériau à très haut module en extension, ledit module étant supérieur à 50 MPa (de préférence compris entre 50 et 130 MPa), plus préférentiellement supérieur à 60 MPa (notamment entre 60 et 120 MPa).

Les mesures de module en extension sont effectuées, sauf indication différente, à une température de 80°C selon la norme ASTM D 638 (éprouvette N°IV) : on mesure en seconde élongation (c'est-à-dire après un cycle d'accommodation), sous une vitesse de traction de 200 mm/min, le module sécant "vrai" (i.e., ramené à la section réelle de l'éprouvette), à 10% d'allongement, noté E10 et exprimé en MPa.

Le matériau à très haut module peut constituer la totalité de l'appui ou tout au moins sa face externe au contact de l'intérieur de l'enveloppe du pneumatique en conditions de roulage.

On utilise de préférence un élastomère thermoplastique (en abrégé "TPE") qui présente notamment l'avantage d'être recyclable, de nécessiter pour sa fabrication des temps de cycle industriel courts, de présenter en outre des propriétés mécaniques bien reproductibles.

Un élastomère TPE est de manière connue un polymère élastomérique linéaire ayant des températures de mise en oeuvre inférieures à 400°C et dont les propriétés rhéologiques permettent d'envisager des méthodes de transformation telles que l'injection ou l'extrusion. Il se caractérise par exemple par une structure comportant deux phases non compatibles, une rassemblant les séquences thermoplastiques de la chaîne qui sont ainsi dispersées dans la phase élastomère. Sa structure de polymère linéaire peut être également composée de séquences cristallines rigides et de séquences amorphes souples.

Sans que l'énumération qui suit soit considérée comme limitative, on peut citer :
a) les copolymères séquencés styrène-butadiène, styrène-isoprène ;
b) les élastomères thermoplastiques dérivés des polyoléfines, mélanges physiques d'homopolymère ou de copolymère de propylène avec un élastomère non vulcanisé de type EPM ou EPDM (caoutchouc d'éthylène ou de propylène) ;
c) les polyethers-esters bloc amides, enchaînement linéaire et régulier de segments polyamides rigides et de segments polyethers ou polyesters souples ;
d) les élastomères de polyesters.

D'autres exemples de matériaux à très haut module convenant aux appuis sont acier, aluminium, polyamides, polypropylènes, voire polyuréthannes à très haut module, les précédents polymères étant éventuellement renforcés, de manière connue, par des charges renforçantes telles que par exemple fibres ou billes de verre.

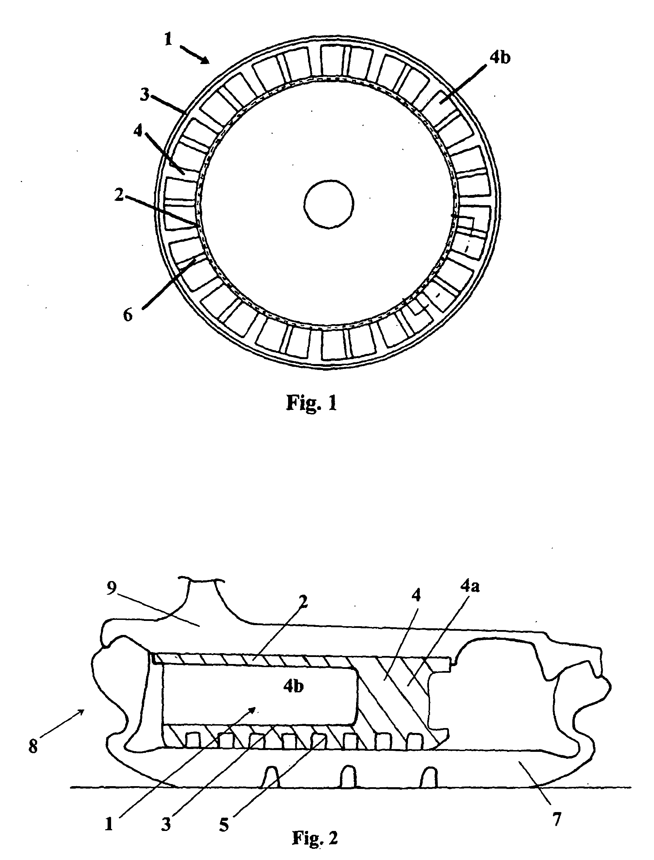

A titre d'exemple préférentiel, l'invention est avantageusement mise en oeuvre avec des appuis de sécurité comportant essentiellement, en référence aux Fig. 1 et 2 annexées, une base 2, de forme généralement annulaire ; un sommet 3, sensiblement annulaire, avec sur sa paroi radialement extérieure (de façon optionnelle) des rainures longitudinales 5, et un corps annulaire 4 de liaison entre la base 2 et le sommet 3.

La Fig. 2 illustre notamment la fonction d'un appui 1 qui est de supporter la bande de roulement 7 du pneumatique 8 (monté sur sa jante 9) en cas de forte perte de pression de gonflage de celui-ci.

La coupe de la Fig. 2 montre un exemple particulier d'un tel appui 1, avec une première partie massive 4a du corps annulaire 4 ainsi qu'une seconde partie 4b constituée d'évidements (voir également Fig. 1) s'étendant axialement sur sensiblement plus de la moitié du corps annulaire 4, en débouchant du côté extérieur dans une direction sensiblement axiale. Ces évidements 4b sont régulièrement répartis sur toute la circonférence du corps annulaire 4 et ils définissent des cloisons 6, lesquelles assurent une liaison radiale directe entre le sommet 3 et la base 2 de l'appui 1. Les évidements 4b et donc les cloisons 6 sont suffisamment nombreux, pour procurer un support régulier lors du roulage sous appui.

La présente invention s'applique avantageusement à un ensemble monté dont la structure d'appui est telle que divulguée dans la demande WO 00/76791 (ou US 6,564,842) précitée, comportant en particulier :
- une base sensiblement cylindrique destinée à s'adapter autour de la jante ;
- un sommet sensiblement cylindrique destiné à entrer en contact avec la bande de roulement en cas de perte de pression, et laissant une garde par rapport à celle-ci à la pression nominale, et
- un corps annulaire reliant ladite base et ledit sommet, ledit corps comportant un élément de support continu circonférentiellement avec un plan médian circonférentiel, ledit élément de support comprenant :
   - une pluralité de cloisons s'étendant axialement de part et d'autre dudit plan médian circonférentiel et réparties sur la circonférence dudit appui, et
   - des éléments de jonction s'étendant sensiblement circonférentiellement et reliant chacun deux extrémités disposées du même côté de l'appui de deux cloisons adjacentes, lesdits éléments de jonction étant disposés successivement de façon alternée de part et d'autre desdites cloisons,
un tel appui étant caractérisé en ce que lesdites cloisons sont adaptées dans leur partie centrale relativement à leurs extrémités latérales pour renforcer la résistance à un flambement sous un chargement radial dudit corps annulaire.

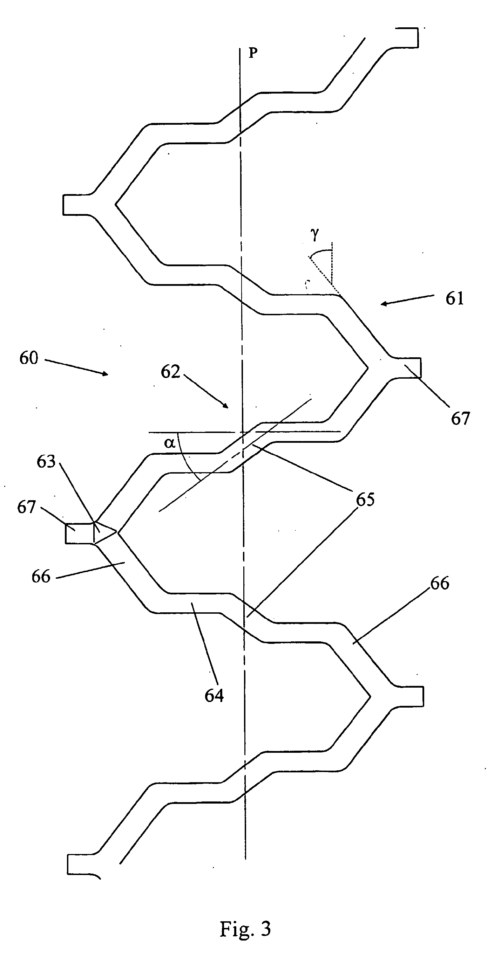

L'invention s'applique plus particulièrement à un appui dans lequel lesdites cloisons présentent, d'une extrémité latérale à l'autre, plusieurs inversions (par exemple trois ou quatre) du sens de leur courbure, notamment dans lequel lesdites cloisons présentent, dans leur zone centrale, par exemple au moins deux parties s'étendant sensiblement axialement décalées circonférentiellement l'une par rapport à l'autre ainsi qu'une troisième partie de jonction, comme illustré à titre d'exemple à la Fig. 3.

Cette Fig. 3 schématise en coupe un exemple d'un corps annulaire pouvant servir d'élément de support pour l'appui 1, dont les cloisons 62 présentent plusieurs inversions de courbure dans leur largeur. Plus précisément, les cloisons 62 comportent des segments rectilignes et présentent au moins trois inversions de leur sens de courbure. Elles comprennent deux parties latérales d'orientation axiales 64 reliées d'une part par une partie centrale 65 et d'autre part aux éléments de jonction 63 par des extrémités latérales 66 d'orientation moyenne y proche de 30 degrés relativement à la direction circonférentielle. La variation α d'orientation moyenne entre les deux parties d'orientation axiale 64 des cloisons 62 et la partie centrale de jonction 65 est par exemple de l'ordre de 40 degrés.

### II. EXEMPLES DE REALISATION

Dans les exemples de réalisation qui suivent, les dimensions caractéristiques (respectivement largeur - diamètre intérieur - hauteur) en mm de chaque appui 1 sont : 115 - 420 - 45.

Chaque appui 1 est en matériau à très haut module (E10) avantageusement supérieur à 70 MPa à 80°C. Il est renforcé par exemple par une grille (armature de renforcement) composée de plusieurs anneaux telle que décrite dans la demande WO 02/24476 (ou US2003/0168142).

L'emploi de ce TPE à très haut module (Hytrel^{®} de la société Du Pont de Nemours - E10 d'environ 75°MPa) a permis de confectionner un appui avec des épaisseurs de cloisons très faibles, d'environ 6 mm.

Cinq compositions lubrifiantes notées C-1 à C-5, conformes (C-3 à C-5) ou non conformes (C-1 et C-2) à l'invention, ont été préparées, en ajustant leurs formulations et/ou conditions de fabrication (vitesse et durée de mélangeage), afin de faire varier leurs viscosités η₁ et η₂ dans les domaines indiqués au tableau 1 qui suit. Pour les compositions selon l'invention, le mélangeage a été préférentiellement réalisé en moins de 30 min, sous une forte contrainte de cisaillement, avec incorporation de la totalité de l'agent épaississant, en une ou plusieurs fois, dès le début du mélangeage.

Les compositions C-1 à C-4 comportent toutes 5% à 6% de silice pyrogénée ("Cabosil M5" - BET égale à environ 200 m²/g) à titre d'agent épaississant, et, à titre d'agent lubrifiant, un copolymère d'oxyde d'éthylène et d'oxyde de propylène, commercialisé par la société Uniquema sous la dénomination "Emkarox VG 379W" (viscosité = 650 mPa.s - Mn = 5500 g/mol - Mw = 6800 g/mol, Ip = 1,25 - taux molaires d'unités oxyde d'éthylène et oxyde de propylène respectivement de 59% et 41%). Dans ces compositions C-1 à C-4, aucun additif à l'exception de 1% d'antioxydant n'a été ajouté aux compositions lubrifiantes, qui consistent donc essentiellement en la combinaison ci-dessus de l'agent lubrifiant et de la silice. La composition C-5 comporte de la glycérine (78,6%) et de l'eau (19,7%) à titre d'agent lubrifiant, 1,6% de gomme de xanthane à titre d'agent épaississant, 0,1% d'agent tensioactif.

Pour tester ensuite en roulage à plat les compositions lubrifiantes ci-dessus, on a procédé comme suit : des enveloppes de pneumatique identiques ont été pourvues des compositions C-1 à C-5, en appliquant chacune de ces dernières selon une même masse déterminée (120 g) sur une zone médiane de la face interne de l'enveloppe de pneumatique correspondante, zone admettant sensiblement pour plan de symétrie le plan équatorial de l'enveloppe. Puis on a monté ces enveloppes sur des jantes identiques telles qu'illustrées à la Fig. 2, sur lesquelles avaient été préalablement montés des appuis de sécurité identiques tels que décrits précédemment en relation avec les Fig. 1 à 3.

Les dimensions caractéristiques de chaque ensemble monté ainsi obtenu (noté respectivement A-1 à A-5), destiné à équiper un véhicule automobile de marque "RENAULT" (modèle "SCENIC") sont en mm : 195 - 620 - 420 (respectivement, largeur d'enveloppe - diamètre d'enveloppe - diamètre de jante).

Pour les besoins du test, on a ensuite pratiqué une perforation (à l'aide d'un foret de 6 mm de diamètre) à mi-largeur de la bande de roulement de l'enveloppe incluse dans chaque ensemble monté, radialement à l'intérieur d'un fond de sillon de cette bande de roulement.

On a ensuite procédé à des essais successifs de roulage de ces véhicules dont l'un des ensembles montés (avant droit) (respectivement A-1 à A-5), comportant sa composition lubrifiante spécifique (respectivement C-1 à C-5), roule à plat dès le début de chaque essai en raison de cette perforation préalable.

Les conditions particulières de ce roulage à plat étaient les suivantes: charge sur la roue de 450 kg ; vitesse moyenne de roulage de 100 km/h ; température ambiante pour le roulage de 25°C ; roulage sur un circuit de type autoroutier.

Le critère d'arrêt de chaque essai est le kilométrage réalisé jusqu'à la destruction de l'appui de sécurité et/ou de l'enveloppe, ou, dans le cas d'un test positif, l'obtention du kilométrage minimal requis (300 km) sans dommage sur l'ensemble monté.

Il faut noter en préambule à ces essais que les compositions testées C-1 à C-5, y compris donc les compositions C-1 et C-2 non conformes à l'invention, ont toutes donné une excellente endurance (distance parcourue supérieure à 300 km) dans le cas d'appuis en matériau conventionnel à plus bas module (moins de 50 MPa à 80°C), lesdits appuis étant soit en caoutchouc diénique (module E10 égal à 12 MPa environ à 80°C) soit en polyuréthanne (E10 égal à 35 MPa environ à 80°C).

Les résultats obtenus sont rapportés dans le tableau 1 ci-dessous : le résultat d'endurance (notée "D") est d'autant meilleur que la distance parcourue est élevée, la mention "D > 300 km" signifiant simplement que le test a été stoppé après les 300 km visés de roulage à plat.

**Tableau 1**

| Ensemble | composition | viscosité η₁ | viscosité η₂ | endurance ("D") |
|---|---|---|---|---|
| monté : | lubrifiante : | à 0,3 s⁻¹ | à 10 s⁻¹ | en roulage à plat : |
| | | (Pa.s) : | (Pa.s) : | |
| A-1 | C-1 | 1237 | 45 | D < 25 km |
| A-2 | C-2 | 930 | 38 | D < 50 km |
| A-3 | C-3 | 698 | 32 | D > 300 km |
| A-4 | C-4 | 507 | 19 | D > 300 km |
| A-5 | C-5 | 129 | 6 | D > 300 km |

Ces résultats démontrent clairement la supériorité des ensembles montés de l'invention (A-3 à A-5), comparativement aux ensembles témoins (A-1 et A-2), chacun des ensembles montés conformes à l'invention ayant parcouru une distance supérieure à 300 km, nettement améliorée donc par rapport aux ensembles montés témoins.

Les compositions lubrifiantes sélectionnées pour les ensembles montés de l'invention sont donc aptes à offrir une excellente endurance en roulage à plat aux ensembles montés dans le cas d'appuis en matériau à très haut module, cela même pour une quantité relativement réduite de composition lubrifiante appliquée.

Les ensembles montés de l'invention ont en effet pour caractéristique avantageuse de pouvoir fonctionner avec moins de 200 g, plus préférentiellement moins de 150 g de composition lubrifiante ; des quantités inférieures à 100 g (par exemple de l'ordre de 40 à 80 g) se sont révélées suffisantes dans de nombreux cas.

On a ainsi "réconcilié" les deux objectifs a priori contradictoires que sont endurance des ensembles montés et emploi de matériaux à très haut module pour les appuis.

## Revendications

1. Assemblage pneu/ roue pour véhicule automobile comportant une jante, un appui de sécurité qui est monté sur la jante et dont au moins la face radialement externe est constituée d'un matériau à très haut module, une enveloppe de pneumatique montée sur la jante autour dudit appui, ladite jante présentant en chacun de ses deux bords périphériques un siège de jante sur lequel est monté un bourrelet de ladite enveloppe, et comportant entre ses deux sièges une portée recevant ledit appui, **caractérisé en ce que** :
■ ledit matériau à très haut module présente un module sécant en extension (noté E10) à 10% d'allongement, mesuré à 80°C, qui est supérieur à 50 MPa ;
■ ledit assemblage est pourvu d'une composition lubrifiante présentant des valeurs de viscosité (notées respectivement η₁ et η₂), exprimées en Pa.s et mesurées à 20°C, qui vérifient les relations suivantes :
- sous une vitesse de cisaillement de 0,3 s⁻¹ : 80 < η₁ < 2500 ;
- sous une vitesse de cisaillement de 10 s⁻¹ : 0,1 < η₂ < 35.

2. Assemblage selon la revendication 1, les relations suivantes étant vérifiées :
- 150 < η₁ < 2000 ;
- 0,2 < η₂ < 32.

3. Assemblage selon la revendication 2, la relation suivante étant vérifiée :
- 350 < η₁ < 1500.

4. Assemblage selon l'une quelconque des revendications 1 à 3, **caractérisé en ce que** la composition lubrifiante comporte, à titre d'agent lubrifiant, un composé choisi dans le groupe constitué par les huiles minérales, les huiles silicones, la glycérine, les esters de glycérine et d'acides gras, les polymères de chlorofluorocarbone, les polyoxyalcènes et les mélanges de ces composés.

5. Assemblage selon la revendication 4, **caractérisé en ce que** l'agent lubrifiant est choisi dans le groupe constitué par la glycérine, les polyoxyalcènes et les mélanges de ces composés.

6. Assemblage selon la revendication 5, **caractérisé en ce que** l'agent lubrifiant est de la glycérine.

7. Assemblage selon la revendication 5, l'agent lubrifiant étant un polyoxyalcène.

8. Assemblage selon la revendication 7, le polyoxyalcène étant un polyalcène glycol.

9. Assemblage selon la revendication 7 ou 8, l'alcène du polyoxyalcène étant choisi dans le groupe constitué par éthylène, propylène et butylène.

10. Assemblage selon la revendication 9, le polyoxyalcène étant un copolymère ou un mélange de polymères d'oxyde d'éthylène et d'oxyde de propylène.

11. Assemblage selon la revendication 10, le polyoxyalcène étant un copolymère d'oxyde d'éthylène et d'oxyde de propylène, ledit copolymère comportant des unités issues de l'oxyde d'éthylène selon une fraction molaire de 40 à 80% et des unités issues de l'oxyde de propylène selon une fraction molaire de 60 à 20%.

12. Assemblage selon la revendication 11, ledit copolymère comportant des unités issues de l'oxyde d'éthylène selon une fraction molaire de 50 à 70% et des unités issues de l'oxyde de propylène selon une fraction molaire de 50 à 30%.

13. Assemblage selon l'une quelconque des revendications 7 à 12, le polyoxyalcène ayant une masse moléculaire moyenne en nombre comprise entre 1 000 et 10 000 g/mol.

14. Assemblage selon la revendication 13, le polyoxyalcène ayant une masse moléculaire moyenne en nombre comprise entre 2 000 et 6 000 g/mol.

15. Assemblage selon l'une quelconque des revendications 7 à 14, le polyoxyalcène ayant un indice de polymolécularité inférieur à 1,5.

16. Assemblage selon la revendication 15, le polyoxyalcène ayant un indice de polymolécularité inférieur à 1,3.

17. Assemblage selon l'une quelconque des revendications 7 à 16, le polyoxyalcène ayant une viscosité apparente comprise entre 100 et 1500 mPa.s.

18. Assemblage selon la revendication 17, le polyoxyalcène ayant une viscosité apparente comprise entre 200 et 1000 mPa.s.

19. Assemblage selon l'une quelconque des revendications 1 à 18, **caractérisé en ce que** la composition lubrifiante comporte en outre, à titre d'agent épaississant, un composé choisi dans le groupe constitué par les silices, les silicates, les polysaccharides, les sels alcalins (Li, K, Na) d'acides gras, le caoutchouc et les mélanges de ces composés.

20. Assemblage selon la revendication 19, **caractérisé en ce que** l'agent épaississant est de la silice.

21. Assemblage selon la revendication 20, **caractérisé en ce que** le taux de silice est compris entre 4,0% et 7,5%.

22. Assemblage selon la revendication 21, **caractérisé en ce que** le taux de silice est compris entre 4,5% et 7,0%.

23. Assemblage selon l'une quelconque des revendications 20 à 22, la silice ayant une surface spécifique BET inférieure à 450 m²/g.

24. Assemblage selon la revendication 23, la silice ayant une surface spécifique BET comprise entre 50 et 350 m²/g.

25. Assemblage selon la revendication 24, la silice ayant une surface spécifique BET comprise entre 100 et 250 m²/g.

26. Assemblage selon l'une quelconque des revendications 1 à 25, la composition lubrifiante comportant moins de 2% d'eau (% en poids de composition lubrifiante).

27. Assemblage selon la revendication 26, la composition lubrifiante comportant moins de 1 % d'eau (% en poids de composition lubrifiante).

28. Assemblage selon l'une quelconque des revendications 1 à 27, **caractérisé en ce qu'**il est pourvu de ladite composition lubrifiante sur la face radialement interne de ladite enveloppe qui fait face à ladite jante.

29. Assemblage selon l'une quelconque des revendications 1 à 28, E10, mesuré à 80°C, étant compris entre 50 et 130 MPa.

30. Assemblage selon l'une quelconque des revendications 1 à 29, E10, mesuré à 80°C, étant supérieur à 60 MPa.

31. Assemblage selon la revendication 30, E10, mesuré à 80°C, étant compris entre 60 et 120 MPa.

32. Assemblage selon l'une quelconque des revendications 1 à 31, le matériau à très haut module étant un élastomère thermoplastique (TPE).

33. Assemblage selon l'une quelconque des revendications 1 à 32, **caractérisé en ce qu'**il contient moins de 200 g de composition lubrifiante.

34. Assemblage selon la revendication 33, **caractérisé en ce qu'**il contient moins de 150 g de composition lubrifiante.

35. Assemblage selon la revendication 34, **caractérisé en ce qu'**il contient moins de 100 g de composition lubrifiante.

36. Assemblage selon la revendication 35, **caractérisé en ce qu'**il contient de 40 à 80 g de composition lubrifiante.

## Claims

1. A tyre/wheel assembly for an automobile vehicle comprising a rim, a safety support which is mounted on the rim and at least the radially outer face of which is formed of a material of very high modulus, a tyre casing mounted on the rim around said support, said rim having on each of its two peripheral edges a rim seat on which is mounted a bead of said casing, and comprising between its two seats a bearing surface receiving said support, **characterised in that**:
■ said material of very high modulus has a secant tensile modulus (E10) at 10% elongation, measured at 80°C, which is greater than 50 MPa;
■ said assembly is provided with a lubricating composition having values of viscosity (denoted η₁ and η₂ respectively), expressed in Pa.s and measured at 20°C, which satisfy the following relationships:
- at a shear rate of 0.3 s⁻¹: 80 < η₁ < 2500;
- at a shear rate of 10 s⁻¹: 0.1 < η₂ < 35.

2. An assembly according to Claim 1, the following relationships being satisfied:
- 150 < η₁ < 2000;
- 0.2 < η₂ < 32.

3. An assembly according to Claim 2, the following relationship being satisfied:
- 350 < η₁ < 1500.

4. An assembly according to any one of Claims 1 to 3, **characterised in that** the lubricating composition comprises, as lubricating agent, a compound selected from the group consisting of mineral oils, silicone oils, glycerin, esters of glycerin and fatty acids, chlorofluorocarbon polymers, polyoxyalkenes and mixtures of these compounds.

5. An assembly according to Claim 4, **characterised in that** the lubricating agent is selected from the group consisting of glycerin, polyoxyalkenes and mixtures of these compounds.

6. An assembly according to Claim 5, **characterised in that** the lubricating agent is glycerin.

7. An assembly according to Claim 5, the lubricating agent being a polyoxyalkene.

8. An assembly according to Claim 7, the polyoxyalkene being a polyalkene glycol.

9. An assembly according to Claim 7 or 8, the alkene of the polyoxyalkene being selected from the group consisting of ethylene, propylene and butylene.

10. An assembly according to Claim 9, the polyoxyalkene being a copolymer or a mixture of polymers of ethylene oxide and propylene oxide.

11. An assembly according to Claim 10, the polyoxyalkene being a copolymer of ethylene oxide and of propylene oxide, said copolymer comprising units resulting from ethylene oxide in a molar fraction of 40 to 80% and units resulting from propylene oxide in a molar fraction of 60 to 20%.

12. An assembly according to Claim 11, said copolymer comprising units resulting from ethylene oxide in a molar fraction of 50 to 70% and units resulting from propylene oxide in a molar fraction of 50 to 30%.

13. An assembly according to any one of Claims 7 to 12, the polyoxyalkene having a number-average molecular weight of between 1,000 and 10,000 g/mol.

14. An assembly according to Claim 13, the polyoxyalkene having a number-average molecular weight of between 2,000 and 6,000 g/mol.

15. An assembly according to any one of Claims 7 to 14, the polyoxyalkene having a polymolecularity index of less than 1.5.

16. An assembly according to Claim 15, the polyoxyalkene having a polymolecularity index of less than 1.3.

17. An assembly according to any one of Claims 7 to 16, the polyoxyalkene having an apparent viscosity of between 100 and 1500 mPa.s.

18. An assembly according to Claim 17, the polyoxyalkene having an apparent viscosity of between 200 and 1000 mPa.s.

19. An assembly according to any one of Claims 1 to 18, **characterised in that** the lubricating composition furthermore comprises, as thickening agent, a compound selected from the group consisting of silicas, silicates, polysaccharides, alkali salts (Li, K, Na) of fatty acids, rubber and mixtures of these compounds.

20. An assembly according to Claim 19, **characterised in that** the thickening agent is silica.

21. An assembly according to Claim 20, **characterised in that** the amount of silica is between 4.0% and 7.5%.

22. An assembly according to Claim 21, **characterised in that** the amount of silica is between 4.5% and 7.0%.

23. An assembly according to any one of Claims 20 to 22, the silica having a BET specific surface area of less than 450 m²/g.

24. An assembly according to Claim 23, the silica having a BET specific surface area of between 50 and 350 m²/g.

25. An assembly according to Claim 24, the silica having a BET specific surface area of between 100 and 250 m²/g.

26. An assembly according to any one of Claims 1 to 25, the lubricating composition comprising less than 2% of water (% by weight of lubricating composition).

27. An assembly according to Claim 26, the lubricating composition comprising less than 1 % of water (% by weight of lubricating composition).

28. An assembly according to any one of Claims 1 to 27, **characterised in that** it is provided with said lubricating composition on the radially inner face of said casing which faces said rim.

29. An assembly according to any one of Claims 1 to 28, E10, measured at 80°C, being of between 50 and 130 MPa.

30. An assembly according to any one of Claims 1 to 29, E10, measured at 80°C, being greater than 60 MPa.

31. An assembly according to Claim 30, E10, measured at 80°C, being of between 60 and 120 MPa.

32. An assembly according to any one of Claims 1 to 31, the material of very high modulus being a thermoplastic elastomer (TPE).

33. An assembly according to any one of Claims 1 to 32, **characterised in that** it contains less than 200 g of lubricating composition.

34. An assembly according to Claim 33, **characterised in that** it contains less than 150 g of lubricating composition.

35. An assembly according to Claim 34, **characterised in that** it contains less than 100 g of lubricating composition.

36. An assembly according to Claim 35, **characterised in that** it contains from 40 to 80 g of lubricating composition.

## Patentansprüche

1. Reifen-/Radanordnung für ein Kraftfahrzeug, umfassend eine Felge, einen Sicherheitsstützkörper, der auf der Felge montiert ist, wobei mindestens dessen radiale äußere Fläche aus einem Material mit sehr hohem Modul besteht, eine Reifenkarkasse, die auf der Felge um den Stützkörper herum montiert ist, wobei die Felge auf jeder ihrer beiden peripheren Ränder eine Reifensitzfläche aufweist, auf der eine Armierung der Karkasse montiert ist, und umfassend zwischen ihren beiden Sitzflächen eine Auflagefläche, die den Stützkörper aufnimmt, **dadurch gekennzeichnet, dass**:
• das Material mit sehr hohem Modul ein Sekantenmodul in Extension (als E10 bezeichnet) mit 10 % Ausdehnung aufweist, das, gemessen bei 80 °C, größer als 50 MPa ist;
• wobei die Anordnung mit einer Schmierzusammensetzung versehen ist, die Viskositätswerte (jeweils mit η₁ bzw. η₂ bezeichnet), ausgedrückt in Pa.s und gemessen bei 20 °C, aufweist, die den folgenden Beziehungen entsprechen:
- bei einer Schergeschwindigkeit von 0,3 s⁻¹: 80 < η1 < 2.500;
- bei einer Schergeschwindigkeit von 10 s⁻¹: 0,1 < η2 < 35.

2. Anordnung nach Anspruch 1, die den folgenden Beziehungen entspricht:
- 150 < η1 < 2.000;
- 0,2 < η2 < 32.

3. Anordnung nach Anspruch 2, die den folgenden Beziehungen entspricht:
- 350 < η1 < 1.500.

4. Anordnung nach einem der Ansprüche 1 bis 3, **dadurch gekennzeichnet, dass** die Schmierzusammensetzung als Schmiermittel eine Verbindung umfasst, ausgewählt aus der Gruppe bestehend aus Mineralölen, Siliconölen, Glycerin, Glycerin- und Fettsäureestern, Fluorchlorkohlenwasserstoffpolymeren, Polyoxyalkylenen und Gemischen dieser Verbindungen.

5. Anordnung nach Anspruch 4, **dadurch gekennzeichnet, dass** das Schmiermittel ausgewählt ist aus der Gruppe bestehend aus Glycerin, Polyoxyalkylenen und Gemischen dieser Verbindungen.

6. Anordnung nach Anspruch 5, **dadurch gekennzeichnet, dass** das Schmiermittel Glycerin ist.

7. Anordnung nach Anspruch 5, wobei das Schmiermittel ein Polyoxyalkylen ist.

8. Anordnung nach Anspruch 7, wobei das Polyoxyalkylen ein Polyalkylenglykol ist.

9. Anordnung nach Anspruch 7 oder 8, wobei das Alkylen des Polyoxyalkylens ausgewählt ist aus der Gruppe bestehend aus Ethylen, Propylen und Butylen.

10. Anordnung nach Anspruch 9, wobei das Polyoxyalkylen ein Copolymer oder ein Gemisch aus Ethylenoxid- und Propylenoxidpolymeren ist.

11. Anordnung nach Anspruch 10, wobei das Polyoxyalkylen ein Copolymer aus Ethylenoxid und Propylenoxid ist, wobei das Copolymer Einheiten umfasst, die von dem Ethylenoxid stammen, die einem Molanteil von 40 bis 80 % entsprechen, und Einheiten, die von dem Propylenoxid stammen, die einem Molanteil von 60 bis 20 % entsprechen.

12. Anordnung nach Anspruch 11, wobei das Copolymer Einheiten umfasst, die von dem Ethylenoxid stammen, die einem Molanteil von 50 bis 70 % entsprechen, und Einheiten, die von dem Propylenoxid stammen, die einem Molanteil von 50 bis 30 % entsprechen.

13. Anordnung nach einem der Ansprüche 7 bis 12, wobei das Polyoxyalkylen einen Zahlenmittelwert des Molekulargewichts im Bereich zwischen 1.000 und 10.000 g/mol aufweist.

14. Anordnung nach Anspruch 13, wobei das Polyoxyalkylen einen Zahlenmittelwert des Molekulargewichts im Bereich zwischen 2.000 und 6.000 g/mol aufweist.

15. Anordnung nach einem der Ansprüche 7 bis 10, wobei das Polyoxyalkylen einen Polymolekularitätsindex kleiner als 1,5 aufweist.

16. Anordnung nach Anspruch 15, wobei das Polyoxyalkylen einen Polymolekularitätsindex kleiner als 1,3 aufweist.

17. Anordnung nach einem der Ansprüche 7 bis 16, wobei das Polyoxyalkylen eine scheinbare Viskosität im Bereich zwischen 100 und 1.500 mPa.s aufweist.

18. Anordnung nach Anspruch 17, wobei das Polyoxyalkylen eine scheinbare Viskosität im Bereich zwischen 200 und 1.000 mPa.s aufweist.

19. Anordnung nach einem der Ansprüche 1 bis 18, **dadurch gekennzeichnet, dass** die Schmierzusammensetzung als Verdickungsmittel ferner eine Verbindung umfasst, ausgewählt aus der Gruppe bestehend aus Siliciumdioxiden, Silicaten, Polysachariden, Alkalisalzen (Li, K, Na) von Fettsäuren, Kautschuk und Gemischen dieser Verbindungen.

20. Anordnung nach Anspruch 19, **dadurch gekennzeichnet, dass** das Verdickungsmittel Siliciumdioxid ist.

21. Anordnung nach Anspruch 20, **dadurch gekennzeichnet, dass** der Siliciumdioxidanteil im Bereich zwischen 4,0 % und 7,5 % liegt.

22. Anordnung nach Anspruch 21, **dadurch gekennzeichnet, dass** der Siliciumdioxidanteil im Bereich zwischen 4,5 % und 7,0 % liegt.

23. Anordnung nach einem der Ansprüche 20 bis 22, wobei das Siliciumdioxid eine spezifische BET-Oberfläche kleiner als 450 m²/g aufweist.

24. Anordnung nach Anspruch 23, wobei das Siliciumdioxid eine spezifische BET-Oberfläche im Bereich zwischen 50 und 350 m²/g aufweist.

25. Anordnung nach Anspruch 24, wobei das Siliciumdioxid eine spezifische BET-Oberfläche im Bereich zwischen 100 und 250 m²/g aufweist.

26. Anordnung nach einem der Ansprüche 1 bis 25, wobei die Schmierzusammensetzung weniger als 2 % Wasser (in Gew.-% der Schmierzusammensetzung) umfasst.

27. Anordnung nach einem der Ansprüche 26, wobei die Schmierzusammensetzung mindestens 1 % Wasser (in Gew.-% der Schmierzusammensetzung) umfasst.

28. Anordnung nach einem der Ansprüche 1 bis 27, **dadurch gekennzeichnet, dass** sie mit der Schmierzusammensetzung auf der radialen inneren Fläche der Karkasse, die der Felge gegenüberliegt, versehen ist.

29. Anordnung nach einem der Ansprüche 1 bis 28, wobei E10, gemessen bei 80 °C, im Bereich zwischen 50 und 130 MPa liegt.

30. Anordnung nach einem der Ansprüche 1 bis 29, wobei E10, gemessen bei 80 °C, größer als 60 MPa ist.

31. Anordnung nach Anspruch 30, wobei E10, gemessen bei 80 °C, im Bereich zwischen 60 und 120 MPa liegt.

32. Anordnung nach einem der Ansprüche 1 bis 31, wobei das Material mit sehr hohem Modul ein thermoplastisches Elastomer (TPE) ist.

33. Anordnung nach einem der Ansprüche 1 bis 32, **dadurch gekennzeichnet, dass** sie weniger als 200 g der Schmierzusammensetzung enthält.

34. Anordnung nach Anspruch 33, **dadurch gekennzeichnet, dass** sie weniger als 150 g der Schmierzusammensetzung umfasst.

35. Anordnung nach Anspruch 34, **dadurch gekennzeichnet, dass** sie weniger als 100 g der Schmierzusammensetzung umfasst.

36. Anordnung nach Anspruch 35, **dadurch gekennzeichnet, dass** sie 40 bis 80 g der Schmierzusammensetzung umfasst.
